# EUROPÄISCHE PATENTANMELDUNG

(11) **EP 4 371 906 A1**
(43) Veröffentlichungstag der Anmeldung: **22.05.2024**
(21) Anmeldenummer: 22208593.8
(22) Anmeldetag: 21.11.2022
(51) Int. Cl.: B65G 1/04, B65G 47/90, B65G 1/137

(54) **VERFAHREN ZUM EINLAGERN EINER MEHRZAHL VON STÜCKGÜTERN IN EINE KOMMISSIONIERVORRICHTUNG**

(71) Anmelder: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(57) **Zusammenfassung**

Die vorliegende Erfindung betrifft ein Verfahren zum Einlagern einer Mehrzahl von Stückgütern in eine Kommissioniervorrichtung. Bekannte Verfahren zum Einlagern sind zeitaufwendig, da jedes Stückgut einzeln einzulagern ist. Erfindungsgemäß ist es vorgesehen, dass a) mit einem Lesegerät (80) ein eindeutiger Identifizierers (EI) eines einzulagernden Stückgutes (6) ermittelt wird, b) über den eindeutigen Identifizierers ermittelt wird, ob die Dimensionen des Stückgutes (6) bekannt sind, c) ein Stückgut mit bekannten Dimensionen in einem Ablagebereich (21, 31) gemäß einer vorgegebenen Ablagevorgabe angeordnet wird, d) die Schritte a) - c) wiederholt werden, bis erfasst wird, dass ein letztes Stückgut in dem Ablagebereich (21, 31) abgelegt wurde, e1) die abgelegten Stückgüter (6) in einer Einlagerungsrichtung bewegt werden und e2) anhand der Dimensionen der abgelegten Stückgüter ein Entnahmeregime erstellt wird, wobei das Entnahmeregime zumindest eine Entnahmeanweisung umfasst, f1) eine Entnahmeanweisung abgearbeitet wird, f2) geprüft wird, ob weitere Entnahmeanweisungen abzuarbeiten sind und die Schritte f1) und f2) wiederholt werden bis sämtliche Entnahmeanweisungen eines Entnahmeregimes abgearbeitet sind.

## Beschreibung

Die vorliegende Erfindung betrifft ein Verfahren zum Einlagern einer Mehrzahl von Stückgütern, insbesondere Arzneimittelpackungen, in eine Kommissioniervorrichtung.

Automatisierte Kommissioniervorrichtungen werden häufig in Apotheken eingesetzt, um Arzneimittelpackungen platzsparend lagern zu können. Die Arzneimittelpackungen können in den bekannten, für Apotheken geeigneten Kommissioniervorrichtungen chaotisch gelagert werden, d. h. die Arzneimittelpackungen werden in der Vorrichtung nicht an vorbestimmten Ablageplätzen gelagert, sondern an solchen Ablageplätzen, bei denen gerade ausreichend Lagerplatz vorhanden ist. Überflüssiges Leervolumen kann so vermieden werden, die Anzahl an gelagerten Arzneimittelpackungen pro m² Grundfläche erheblich erhöht werden. Die chaotische Lagerung wird regelmäßig für solche Arzneimittel bzw. Arzneimittelpackungen genutzt, deren Ausgabefrequenz eher gering ist (sogenannte Langsamdreher).

Zur Einlagerung einer Arzneimittelpackung wird diese bei bekannten Verfahren zum Einlagern identifiziert, ggf. vermessen und in einem vorgegebenen Ablagebereich einer Einlagerungseinrichtung der Kommissioniervorrichtung abgelegt. Sodann wird die Arzneimittelpackung in einen Zugriffbereich eines Greifers, wie er beispielsweise aus der EP 3 431 421 A1 bekannt ist, eines Bediengeräts innerhalb der Kommissioniervorrichtung bewegt, bei welchem der Greifer die Arzneimittelpackung aufnimmt und auf einen von einer Steuereinrichtung vorgegebenen Lagerplatz bewegt - es wird also stets nur eine Arzneimittelpackung pro Einlagerungsvorgang bearbeitet.

Es ist auch bekannt, zunächst eine Mehrzahl identischer Arzneimittelpackungen identisch in dem Ablagebereich anzuordnen und diese dann zusammen in die Kommissioniervorrichtung zu bewegen, wo diese dann gemeinsam von dem Greifer ergriffen und zusammen einem bzw. mehreren Lagerplätzen zugeführt werden. Dieses Verfahren wird insbesondere für sogenannten Schnelldreher (Arzneimittelpackungen mit hoher Ausgabefrequenz) verwendet, die regelmäßig in Schachtsystemen gelagert werden, die eine schnelle Ausgabe ermöglichen. Die Einlagerung mehrerer identischer Arzneimittelpackung ist wesentlich schneller als die Einlagerung einer Mehrzahl unterschiedlicher Arzneimittelpackung, da bei diesen der gleiche Vorgang für jede Arzneimittelpackung zu wiederholen ist.

Es ist daher Aufgabe der vorliegenden Erfindung, ein Verfahren bereitzustellen, mit welchem auch eine Mehrzahl nicht-identischer Stückgüter zeitsparend eingelagert werden kann.

Diese Aufgabe wird durch ein Verfahren gemäß Patentanspruch 1. Bei dem erfindungsgemäßen Verfahren zum Einlagern einer Mehrzahl von Stückgütern in eine Kommissioniervorrichtung mit zumindest einer Regalreihe mit einer Mehrzahl von Lagerplätzen, einer Steuereinrichtung, einer Einlagerungseinrichtung sowie einem Greifer für Stückgüter wird zunächst a) mit einem mit der Steuereinrichtung gekoppeltem Lesegerät ein eindeutiger Identifizierers eines einzulagernden Stückgutes ermittelt. Der eindeutige Identifizierer umfasst zumindest einen eindeutigen Produktcode, der das einzulagernde Stückgut eindeutig identifiziert. Werden beispielsweise Arzneimittelpackungen eingelagert, kann der eindeutige Identifizierer als Produktcode die PZN umfassen. Die PZN ist eine achtstellige, numerische und "nicht sprechende" Nummer, die Arzneimittel nach Bezeichnung, Darreichungsform, Wirkstoffstärke und Packungsgröße eindeutig kennzeichnet. Das Lesegerät kann drahtgebunden oder drahtlos mit der Steuereinrichtung der Kommissioniervorrichtung koppelbar sein bzw. für den Lesevorgang wie vorgenannt mit dieser gekoppelt sein.

In einem nächsten Schritt b) über den eingelesenen eindeutigen Identifizierer in einer Datenbank ermittelt, ob die Dimensionen (Höhe, Breite, Tiefe) des Stückgutes bekannt sind, und sodann wird das in einem Schritt c) das Stückgut mit bekannten Dimensionen in einem Ablagebereich der Einlagerungseinrichtung gemäß einer vorgegebenen Ablagevorgabe angeordnet.

Bei dem Ablagebereich handelt es sich um einen durch zumindest eine Markierung gekennzeichneten Bereich, der einem Benutzer aufzeigt, wo ein Stückgut auf der Einlagerungseinrichtung abzulegen ist. Als Markierung sind Markierungen auf der Einlagerungseinrichtung selbst denkbar, eine Lichtschranke, Markierungen seitlich der Einlagerungseirichtung selbst oder ein beleuchteter Bereich; darüber hinaus sind weitere Markierungen denkbar. Die Anordnung darf aber nicht auf eine beliebige Art und Weise erfolgen, sondern entsprechend einer vorgegebenen Ablagevorgabe, die beispielweise besagt, dass die Stückgüter in Längsrichtung orthogonal zu einer Einlagerungseinrichtung von "links nach rechts" in dem Ablagebereich anzuordnen sind. Auf diese Weise wird sichergestellt, dass der Steuereinrichtung die Reihenfolge und Ausrichtung der angeordneten Stückgüter bekannt ist - dies ist für nachfolgende Verfahrensschritte wesentlich.

Gemäß einem Schritt d) werden die Schritte a) - c) so oft durchgeführt, bis erfasst wird, dass ein letztes Stückgut in dem Ablagebereich abgelegt wurde. Wie das Ablegen des letzten Stückgutes genau erfasst wird, ist für die Erfindung als solche unwesentlich, Beispiele werden weiter unten beschrieben. Wie oft die Schritte a) - c) durchgeführt werden ist abhängig von den Dimensionen der abgelegten Stückgüter, der Breite der Einlagerungseinrichtung und der Ablagevorgabe. Sofern erforderlich kann auch die Anordnung eines ersten Stückgutes als die Ablage eines "letzten" Stückguts erfasst werden - in diesem Fall wird lediglich ein Stückgut eingelagert. Das erfindungsgemäße Verfahren zielt aber erfindungsgemäß darauf ab, dass Ablagen einer Mehrzahl von unterschiedlichen Stückgütern zu ermöglichen, so dass das Einlagern nach Ablage nur eines Stückgutes die Ausnahme ist, die jedoch auch bearbeitet werden kann.

Nach dem Erfassen des Ablegens des letzten Stückguts werden in einem Schritt e1) das oder die abgelegten Stückgüter mit der Einlagerungseinrichtung in einer Einlagerungsrichtung bewegt und es wird (Schritt e2)) anhand der Dimensionen des oder der abgelegten Stückgüter ein Entnahmeregime für den Greifer erstellt, wobei das Entnahmeregime zumindest eine Entnahmeanweisung umfasst, und wobei jede Entnahmeanweisung ein oder mehrere Stückgüter umfasst, wobei die Reihenfolge der Schritte e1) und e2) unwesentlich ist; sie können auch zeitgleich durchgeführt oder initiiert werden.

Nach Erstellen des Entnahmeregimes und Bewegen der Stückgüter in Einlagerungsrichtung an den vorgesehenen Entnahmeort wird (Schritt f1)) eine Entnahmeanweisung abgearbeitet, indem eine der aktuellen Entnahmeanweisung entsprechende Anzahl von Stückgütern mit dem Greifer von der Einlagerungseinrichtung bewegt und eingelagert wird.

Sodann wird (Schritt f2)) geprüft, ob weitere Entnahmeanweisungen abzuarbeiten sind und die Schritte f1) und f2) durchgeführt bis sämtliche Entnahmeanweisungen eines Entnahmeregimes abgearbeitet sind.

Wie oben bereits angemerkt, ist der Steuereinrichtung aufgrund des Ermittelns des eindeutigen Identifizierers jeden Stückgutes, den von jedem abgelegten Stückgut bekannten Dimensionen und der Ablagevorgabe die genaue Anordnung aller Stückgüter bekannt. In Abhängigkeit der Dimensionen der Stückgüter sind eine Vielzahl von "Ablagemustern" in dem Ablagebereich denkbar, die eine Anpassung des Auslagerns mit dem Greifer notwendig machen - wenn beispielsweise fünf Stückgüter in dem Ablagebereich von links nach rechts angeordnet sind und das mittige in Bezug auf die Einlagerungsrichtung am breitesten ist, können bei Verwendung eines üblichen Backengreifers sehr wahrscheinlich nicht alle Stückgüter mit einer Greifbewegung entnommen werden, sondern sicher nur die drei "rechten". Das erfindungsgemäß zu erstellende Entnahmeregime würde dann zwei Entnahmeanweisungen umfassen, wobei gemäß der ersten Entnahmeanweisung drei Stückgüter und gemäß der zweiten Entnahmeanweisung zwei Stückgüter zu entnehmen sind. Dementsprechend sind minimal eine und maximal so viele Entnahmeanweisungen abzuarbeiten, wie Stückgüter angeordnet wurden.

Zwar verzögert die (abgesehen von der Ablagevorgabe) freie Anordnung der Stückgüter die Einlagerung der Stückgüter nach dem Erfassen des letzten Stückgutes, jedoch kann die Einlagerungszeit für das Anordnen weiterer Stückgüter genutzt werden, so dass die verzögerte Einlagerung aufgrund der ggf. mehreren Entnahmeanweisungen den Gesamtvorgang nicht verzögert, sondern aufgrund der Möglichkeit der Ablage einer Mehrzahl nicht-identischer Stückgüter in der Summe beschleunigt. Auch ist das erfindungsgemäße Verfahren benutzerfreundlicher, da es weniger monoton ist und der Benutzer bei der Ablage der Stückgüter nicht auf eine bestimmte Anordnung nach Größenvorgaben achten muss.

Wie aus der vorstehenden Beschreibung des erfindungsgemäßen Verfahrens ersichtlich, können nur Stückgüter mit bekannten Dimensionen erfindnungsgemäß eingelagert werden. Die Dimensionen eines Stückguts werden über den eindeutigen Identifizierer in einer Datenbank ermittelt. Werden nach Ermittlung eines eindeutigen Identifizierers in der Datenbank keine entsprechenden Dimensionen aufgefunden, beispielsweise weil der eindeutige Identifizierer noch gar nicht gespeichert ist, kann das Stückgut nicht sofort eingelagert werden. Dies kann einem Benutzer z.B. durch ein Signal angezeigt werden, woraufhin der Benutzer das Stückgut z.B. für eine spätere Bearbeitung lagert. Alternativ kann das Nicht-Bekanntsein der Dimensionen z.B. auch dadurch deutlich gemacht werden, dass der Ablagebereich nicht markiert wird. Bei einer bevorzugten Ausführungsform des erfindungsgemäßen Verfahrens wird bei unbekannten Dimensionen eines Stückguts dieses vermessen und die Dimensionen werden zu dem ermittelten eindeutigen Identifizierer in der Datenbank gespeichert. Das Vermessen kann z.B. "extern" erfolgen, an einer mit der Steuereinrichtung gekoppelten Vermessungseinrichtung.

Um das Einlagern eines Stückgutes mit unbekannten Dimensionen zu beschleunigen und für den Benutzer so einfach wie möglich (und damit so wenig fehleranfällig wir möglich) zu gestalten, ist es bei einer bevorzugten Ausführungsform vorgesehen, dass bei Nicht-Bekanntsein der Dimensionen das Stückgut vermessen wird, indem in dem Ablagebereich angeordnete Stückgüter gemäß den Schritten e1) - f2) eingelagert werden, das Stückgut mit unbekannten Dimensionen in dem Ablagebrich angeordnet und automatisch vermessen wird und die Dimensionen in der Datenbank gespeichert werden. Das Stückgut mit den unbekannten Dimensionen wird dann so interpretiert werden, dass es das vorherige Stückgut als das "letzte" Stückgut kennzeichnet und so die erfindungsgemäße Einlagerung der zuvor abgelegten Stückgüter startet. Nun kann das bisher noch nicht vermessene Stückgut bei der Einlagerung vermessen werden und ggf. weitere Stückgüter hinzugefügt und erfindungsgemäß eingelagert werden.

Wie bereits oben dargelegt, ist es für die Erfindung selbst unwesentlich, wie genau das Anordnen eines letzten Stückguts erfasst wird. Bei einer bevorzugten, technisch sehr einfachen Ausführungsform ist es vorgesehen, dass ein Ablegen eines letzten Stückgutes erfasst wird, indem ein Benutzer eine entsprechende Eingabe an die Steuereinrichtung übermittelt.

Alternativ kann es vorgesehen sein, dass das Ablegen eines letzten Stückgutes anhand eines der Ablagefläche zugeordneten Sensors ermittelt wird. Diese Ausführungsform ist benutzerfreundlicher, technisch ggf. aufwendiger.

Erfindungsgemäß ist es wesentlich, dass die Stückgüter entsprechend einer Ablagevorgabe (z.B. von links nach rechts und Längsseite orthogonal zur Einlagerungsrichtung) angeordnet werden. Die Ablagevorgabe kann an den Aufbau der Kommissioniervorrichtung und der Einlagerungseinrichtung angepasst werden, zusätzlich auch an die Vorlieben eines Benutzers (links nach rechts, rechts nach links). Es kann jedoch vorkommen, dass ein Benutzer ein Stückgut falsch, also nicht entsprechend der Ablagevorgabe, anordnet. Um eine Art einer möglichen Fehlanordnung ohne zu großen Aufwand ermitteln zu können ist es bei einer bevorzugten Ausführungsform vorgesehen, dass nach dem Erfassen des Ablegens des letzten Stückguts in dem Ablagebereich eine Breite der Mehrzahl der abgelegten Stückgüter ermittelt wird und diese mit der größten Breite der abgelegten Stückgüter verglichen wird und bei Auftreten einer einen Grenzwert überschreitenden Abweichung ein Signal ausgegeben wird. Wenn beispielweise sämtliche abgelegen Stückgüter weniger als 5 cm breit und zwischen 10 und 15 cm lang sind, gemäß Ablagevorgabe die Stückgüter mit ihren Längsseiten orthogonal zur Einlagerungseinrichtung abzulegen sind, kann eine ermittelte Breite von > 5 cm nur eine Fehlanordnung durch einen Benutzer bedeuten. Wird dies erkannt wird der Benutzer z.B. zur Korrektur aufgefordert oder zur Neuanordnung sämtlicher Stückgüter aufgefordert.

Der eindeutige Identifizierer umfasst zumindest einen Produktcode des Stückgutes, mit welchem die Dimensionen des Stückgutes verknüpft sind. Der eindeutige Identifizierer muss aber nicht auf den Produktcode beschränkt sein.

Eine Vielzahl von Stückgütern weisen beispielsweise ein Ablaufdatum auf. Bei einer bevorzugten Ausführungsform, bei welcher der eindeutige Identifizierer ein solches Ablaufdatum umfasst, ist es vorgesehen, dass das Ablaufdatum des einzulagernden Stückguts mit dem Ablaufdatum eines gleichen Stückguts verglichen wird und, sofern das einzulagernde Stückgut ein früheres Ablaufdatum aufweist, der Lagerplatz des einzulagernden Stückguts optimiert und / oder die Auslagerungsreihenfolge derart angepasst wird, dass das Stückgut mit dem früheren Ablaufdatum bevorzugt ausgelagert wird.

Stückgüter können auch individuelle Seriennummern umfassen, die in Datenbanken hinterlegt sein können. Bei einer bevorzugten Ausführungsform des erfindungsgemäßen Verfahrens, bei welcher der eindeutige Identifizierer eine eindeutige Seriennummer umfasst, ist es vorgesehen, dass die eindeutige Seriennummer anhand einer Datenbank verifiziert wird und das Verfahren zum Einlagern bei einer fehlerhaften Verifikation gestoppt wird. Auf diese Weise lassen sich z.B. gefälschte Stückgüter ermitteln.

Im Nachfolgenden wird das erfindungsgemäße Verfahren unter Bezugnahme auf die beigefügte Zeichnung näher beschrieben, wobei:
Figur 1 eine perspektivische Ansicht einer Kommissioniervorrichtung zeigt, mit welcher das erfindungsgemäße Verfahren ausgeführt werden kann,
Figur 2 eine Detailansicht des Frontbereiches der Kommissioniervorrichtung zeigt,
Figur 3 eine Draufsicht auf die Kommissioniervorrichtung zeigt;
Figuren 4a - 6b verschiedene Ablage- und Entnahmesituationen veranschaulichen,
Figuren 7a und 7b eine Ablage- und Entnahmesituation mit einer fehlerhaften, nicht der Ablagevorgabe entsprechenden Anordnung von Stückgütern zeigt, und
Figur 8 den Ablauf des erfindungsgemäßen Verfahrens veranschaulicht.

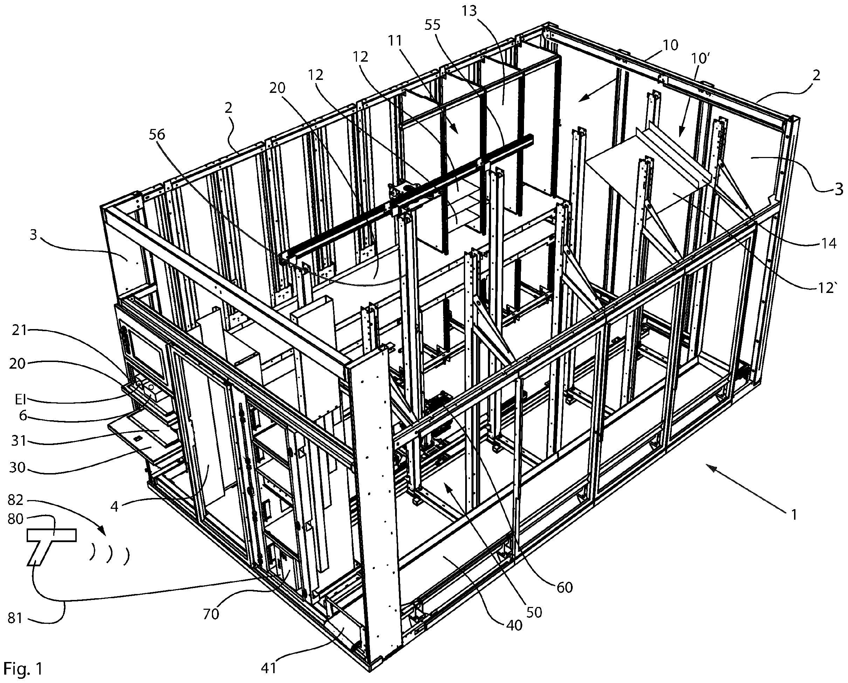

Figur 1 zeigt eine perspektivische Darstellung einer Kommissioniervorrichtung 1, mit welcher das erfindungsgemäße Verfahren ausgeführt werden kann. Die Kommissioniervorrichtung 1 ist nachfolgend lediglich beispielhaft und zum besseren Verständnis der nachfolgenden detaillierten Beschreibung des erfindungsgemäßen Verfahrens beschrieben. Mit der in den Figuren 1 - 3 gezeigten Kommissioniervorrichtung werden als Stückgüter Arzneimittelpackungen gelagert, und im nachfolgenden wird auch der Begriff der Arzneimittelpackung (beispielhaft für den Begriff der Stückgüter) verwendet.

Die Kommissioniervorrichtung 1 umfasst eine Gerüststruktur 2, an welcher eine Mehrzahl von Verkleidungselementen 3 angebracht ist. Der Übersicht halber sind eine Vielzahl der Verkleidungselemente sowie einige Elemente der Gerüststruktur 2 fortgelassen. Die Kommissioniervorrichtung 1 umfasst eine erste Regalreihe 10 mit mehreren Regalen, die jeweils eine Mehrzahl von übereinander angeordneten, sich in einer horizontalen Ebene erstreckende Regalböden 12 mit einer Mehrzahl von Lagerplätzen aufweisen (wobei in Figur 1 lediglich drei Regalböden 12 dargestellt sind; weitere Regalböden sind über, unter und neben den dargestellten angeordnet). Die einzelnen Regale 11 der ersten Regalreihe 10 sind durch Regalwände 13 und eine Mehrzahl der vorgenannten Regalböden 12 gebildet. Bei dem gezeigten Beispiel sind alle Stirnkanten (Ladekanten) der Regalböden in einer vertikalen Ebene angeordnet, was das Ein- und Auslagern von Stückgütern bzw. Arzneimittelpackungen in und von den Regalböden vereinfacht. Die gezeigten Regalböden sind für eine chaotische Lagerung von Arzneimittelpackungen ausgebildet.

Bei der gezeigten Kommissioniervorrichtung ist gegenüber der ersten Regalreihe 10 eine zweite Regalreihe 10' vorgesehen, die aber aus Gründen der Übersichtlichkeit nur angedeutet ist; lediglich einzelne Elemente des Stützgerüstes für diese Regalreihe und ein Regalboden 12' mit einem Lagerschacht 14 für die sortenreine Lagerung sind dargestellt. Die Lagerschachte der Kommissioniervorrichtung sind zur Lagerung von Schnelldrehern vorgesehen und für die vorliegende Erfindung nicht relevant.

Die beispielhaft gezeigte Kommissioniervorrichtung umfasst zwei Einlagerungseinrichtungen 20, 30, die übereinander angeordnet und in die erste Regalreihe 10 integriert sind, so dass über und unter den beiden Einlagerungseinrichtungen 20, 30 Regalböden 12 vorgesehen sind. Die Einlagerungseinrichtungen 20, 30 ragen bei der Front der Kommissioniervorrichtung aus dieser heraus und umfassen bei dem herausragenden Teil jeweils einen Ablagebereich 21, 31, auf welchen Arzneimittelpackungen zur Einlagerung abgelegt werden können. Bei Figur 1 sind in dem Ablagebereich 21 der oberen Einlagerungseinrichtung 20 zwei Arzneimittelpackungen 6 angeordnet.

Bei den Ablagebereichen 21, 31 handelt es sich nicht um Bauteile als solche, sondern um spezielle Bereiche der Einlagerungseinrichtungen, in denen Arzneimittelpackungen gemäß der Ablagevorgabe angeordnet werden. Die Ablagebereiche können beispielsweise durch Markierungen auf einer als Bandförderer ausgebildeter Einlagerungseinrichtung ausgebildet sein. Alternativ kann eine Lichtschranke einen Ablagebereich markieren. Schließlich ist es denkbar, dass eine bewegbare Schranke einen Ablagebereich definiert.

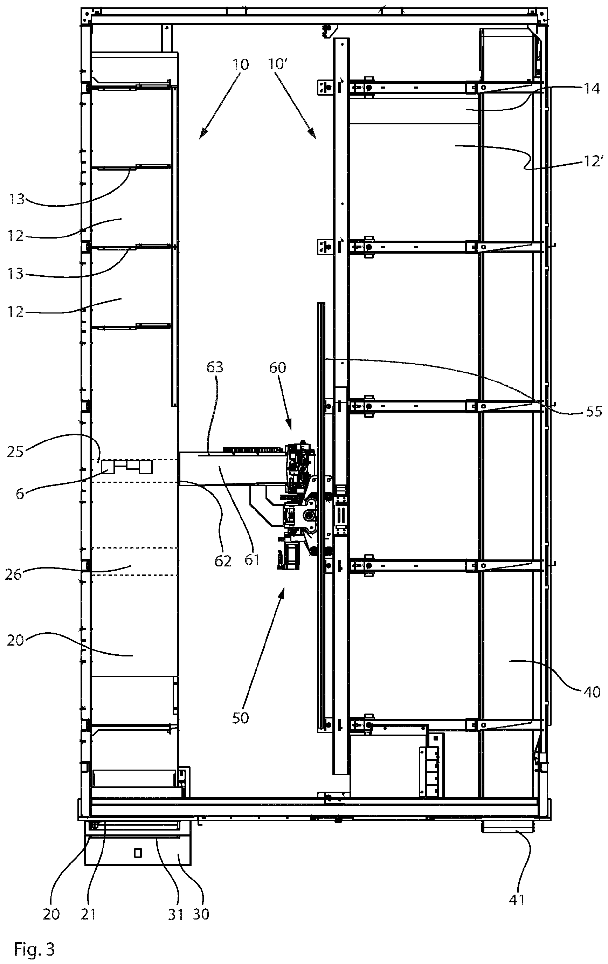

Zwischen der dargestellten ersten Regalreihe und der lediglich angedeuteten zweiten Regalreihe ist ein horizontal und vertikal an einer Führung verfahrbares Bediengerät 50 mit einem Greifer 60 vorgesehen, der unter Bezugnahme auf die Figur 3 näher beschrieben wird. Der Greifer 60 ist entlang einer lediglich angedeuteten Horizontalführung 55 und einer Vertikalführung 56 in einer Gasse zwischen den beiden Regalreihen verfahrbar.

In der Kommissioniervorrichtung ist ferner eine Auslagerungseinrichtung 40 angeordnet, die hier als Bandförderer ausgebildet ist und zwischen der zweiten Regalreihe und der rechten Außenwand der Kommissioniervorrichtung angedeutet ist. Über die Auslagerungseinrichtung werden Arzneimittelpackungen, die auf die Auslagerungseinrichtung bewegt werden, zu einem Entnahmebereich 41 der Auslagerungseinrichtung bewegt. Die Arzneimittelpackungen können auf die Auslagerungseinrichtung gelangen, indem diese beispielsweise mit dem Bediengerät 50, gegebenenfalls unter Zwischenschaltung eines nicht dargestellten Hilfsauslagerungspfades, auf die Auslagerungseinrichtung bewegt werden. Bei den geneigten Lagerschächten können die Arzneimittelpackungen einfach durch Auslösen einer bei einem Ende eines Lagerschachtes angeordneten Auslöseeinrichtung auf die Auslagerungseinrichtung bewegt werden. In einem solchen Fall fallen die Arzneimittelpackungen einfach schwerkraftbedingt auf die Auslagerungseinrichtung.

Bei Figur 1 ist im Frontbereich der Kommissioniervorrichtung eine Steuereinrichtung 70 angeordnet, die mit dem Bediengerät, den Sensoren und Sensorsystemen, und üblicherweise den Einlagerungseinrichtungen und der Auslagerungseinrichtung gekoppelt ist. In der Mitte des Frontbereiches der Kommissioniervorrichtung ist eine Türöffnung 4 vorgesehen, durch welche die Vorrichtung zu Wartungszwecken und in Störfällen betreten werden kann.

In Figur 1 ist ferner symbolisch ein Lesegerät 80 angedeutet, welches über eine Leitung 81 oder über eine Drahtlosverbindung 82 mit der Steuereinrichtung 70 koppelbar ist. Mit dem Lesegerät 80 wird vor dem Anordnen in dem Ablagebereich der eindeutige Identifizierer EI (angedeutet als Kreis auf jeder Arzneimittelpackung) jeder Arzneimittelpackung ermittelt. Wie genau der eindeutige Identifizierer und damit das Lesegerät beschaffen sind ist für die vorliegende Erfindung nebensächlich. Wesentlich ist, dass jede mit dem erfindungsgemäßen Verfahren einzulagernde Arzneimittelpackung einen solchen eindeutigen Identifizierer umfasst und dass ein eindeutiger Identifizierer eine Arzneimittelpackung eindeutig identifiziert. Der genaue Aufbau bzw. Informationsgehalt eines eindeutigen Identifizierers wurde oben bereits kurz dargelegt und wird unter Bezugnahme auf das erfindungsgemäße Verfahren näher beschrieben.

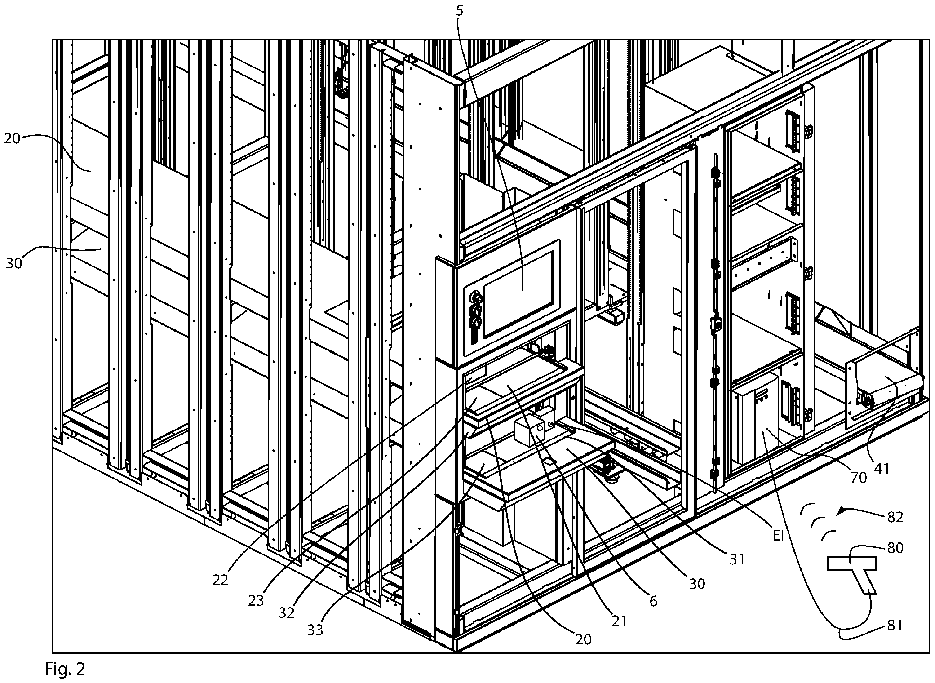

Figur 2 zeigt eine Detailansicht des Frontbereiches der beispielhaften Kommissioniervorrichtung, wobei bei dieser Ansicht insbesondere der Ablagebereich der Einlagerungseinrichtung 20, 30 zu erkennen ist. Bei Figur 2 sind in dem Auflagebereich 31 der unteren Einlagerungseinrichtung 30 zwei Arzneimittelpackungen 6 angeordnet. Oberhalb der Ablagebereich 21, 31 ist bei dem gezeigten Beispiel jeweils ein Auflageerfassungssensor 22, 32 angedeutet, mit welchen ein Erfassungsbereich 23, 33 eines Ablagebereichs 21, 31 überwacht wird.

Sobald ein Stückgut in einem Erfassungsbereich 23, 33 abgelegt wird, oder zumindest teilweise in den Erfassungsbereich hineinragt, wird der Steuereinrichtung 70 ein entsprechendes Signal übermittelt, welches das "letzte" Stückgut kennzeichnet. Wie weit eine Arzneimittelpackung in einen Erfassungsbereich hineinragen muss, um ein vorgenanntes Signal auszulösen, kann bei der Steuereinrichtung oder dem Auflageerfassungssensor bzw. dem Sensorsystem selbst eingestellt werden.

Bei Figur 2 ist ferner eine Ein- und/oder Ausgabeeinrichtung 5 über der oberen Einlagerungseinrichtung 20 angedeutet, mit welcher Informationen bezüglich der einzulagernden Arzneimittelpackungen angezeigt und/oder eingegeben werden können.

Figur 3 zeigt eine Draufsicht auf die beispielhafte Kommissioniervorrichtung, wobei der Übersicht halber ein Großteil des Stützgerüstes 2 fortgelassen ist. Auf der linken Seite ist die Einlagerungseinrichtung 20 zu erkennen, die von einem äußeren Bereich bis weit in die Kommissioniervorrichtung hineinführt. In einem Entnahmebereich 25d er Einlagerungseinrichtung 20, der durch gestrichelte Linien angedeutet ist, sind vier Arzneimittelpackungen 6 angeordnet, wobei die Anordnung genau der Anordnung der Arzneimittelpackungen in den Ablagebereich entspricht. Bei dieser Darstellung ist auch zu erkennen, dass die Einlagerungseinrichtung in die erste Regalreihe 10 integriert ist, da im "oberen" Bereich Regalböden 12 und Regalwände 13 über der Einlagerungseinrichtung 20 angedeutet sind. Auf der rechten Seite ist die Auslagerungseinrichtung 40 mit dem Entnahmebereich 41 zu erkennen, und zum Inneren der Kommissioniervorrichtung hin schließt sich die zweite, lediglich angedeutete Regalreihe 10' an. Zwischen der ersten Regalreihe 10 und der zweiten Regalreihe 10' ist das horizontal und vertikal verfahrbare Bediengerät 50 mit Greifer 60 angeordnet, wobei die Horizontalführung 55 sich normalerweise über die gesamte Länge der Kommissioniervorrichtung erstreckt, um mit dem Bediengerät sämtliche Regalböden der Vorrichtung erreichen zu können. Der Greifer 60 umfasst einen Ablagetisch 61 mit einem stirnseitigen Rand 62, über welchen Arzneimittelpackungen mit angedeuteten Klemmbacken 63 auf den Ablagetisch 61 bewegt werden.

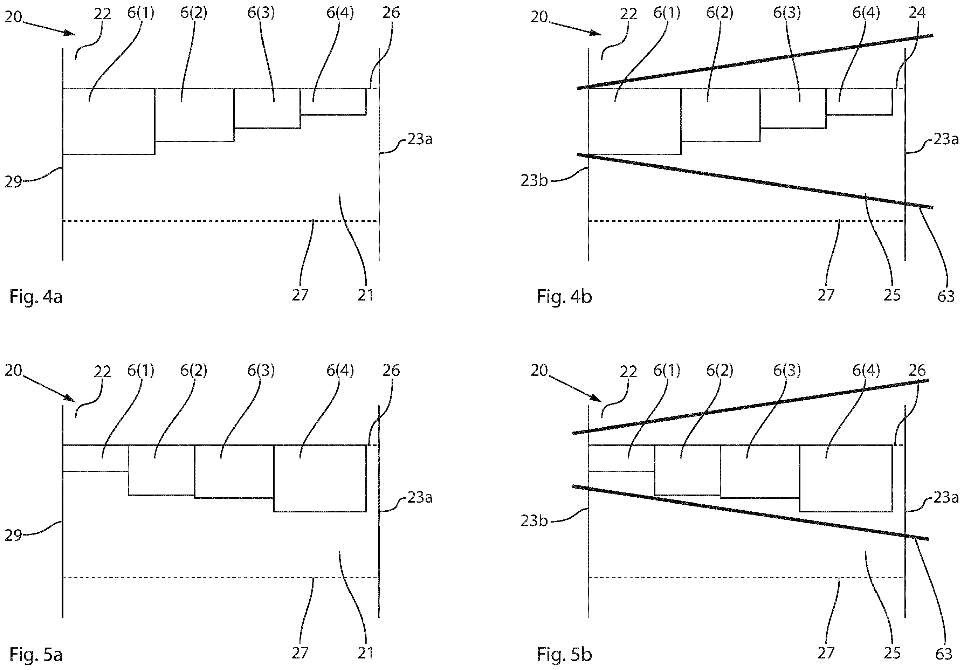

Figuren 4a - 6b veranschaulichen verschiedene Ablagesituationen einer Mehrzahl von Arzneimittelpackungen 6(1) - 6(4), wobei in den Figuren 4a - 6a der Ablagebereich nach Ablage sämtlicher Arzneimittelportionen und in den Figuren 4b - 6b die Arzneimittelportionen im Entnahmebereich 25 dargestellt sind, wobei bei Figuren 4b - 6b zusätzlich Klemmbacken 63 des (nicht dargestellten) Greifers angedeutet sind.

In den Figuren 4a - 6a sind verschiedenen Ablagesituation dargestellt, und zwar nach der Ablagevorgabe "von links nach rechts, Langseite an die obere Markierungslinie des Ablagebereichs". In jeder der Figuren ist der Ablagebereich 21 der Einlagerungseinrichtung 20 schematisch veranschaulicht. Die Einlagerungseinrichtung 20 umfasst ein Förderband 22, auf welchem zwei Markeirungen 26, 27 den Ablagebereich 21 definieren. Im Fall einer solchen Markierung des Ablagebereiches umfasst das Förderband eine Vielzahl von Markierungen, die jeweils mit den abgelegten Arzneimittelportionen in Einlagerungsrichtung / Längsrichtung der Einlagerungseinrichtung bewegt werden. Im Falle einer Markierung durch z.B. eine Lichtschranke ist dies nicht notwendig. Bei dem gezeigten Beispiel umfasst die Einlagerungseinrichtung eine Seitenwand 29, an welcher die erste Arzneimittelpackung 6(1) angelegt wird bzw. werden kann. Die nachfolgenden Arzneimittelpackungen sind an die linksliegenden angelegt, bis der Ablagebereich weitgehend gefüllt ist. Das Förderband 21 ist bei seiner rechten Kante 23a "offen".

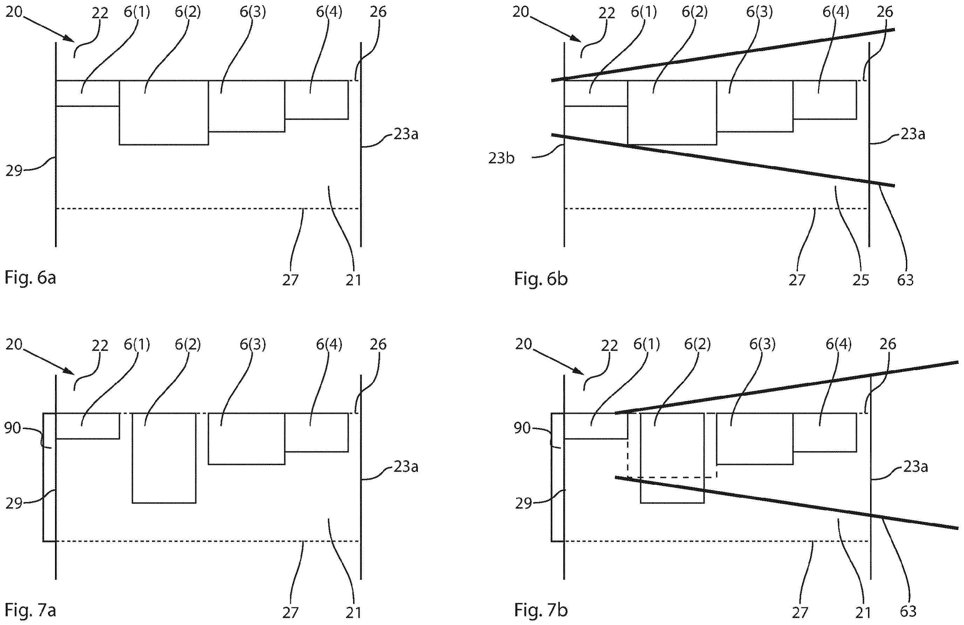

Bei Figur 4a werden die Arzneimittelportionen von links nach rechts "schmaler" (bezogen auf die Einlagerungsrichtung bzw. Längsrichtung der Einlagerungseinrichtung 20). In Figur 5a werden die Arzneimittelpackungen nach rechts "breiter", in Figur 6a ist die zweite Arzneimittelpackung von links (6(2)) die breiteste.

In den Figuren 4b - 6b sind die gleichen Arzneimittelpackungen in dem Entnahmebereich 25 angedeutet, in welchem die Einlagerungseinrichtung 20 auch bei der linken Kante 23b offen ist. Die Figuren 4b - 6b zeigen im Wesentlichen die Situation aus Figur 3, jedoch sind zusätzlich die Klemmbacken 63 des (nicht dargestellten) Greifers angedeutet.

Aufgrund der Dimensionen der abgelegten Arzneimittelpackungen 6(1) - 6(4), der Bauart des Greifers (Klemmbacken) und der Entnahmerichtung (Greifer greift von "rechts" auf die Arzneimittelpackungen zu) folgt, dass nur die Arzneimittelpackungen wie in Figur 4a gezeigt mit dem Greifer sicher in einer Greifbewegung auf den (nicht gezeigten) Ablagetisch des Greifers bewegt werden können. Die breiteste Arzneimittelpackung 6(1) wird von den Klemmbacken sicher gehalten und schiebt die Arzneimittelpackungen 6(2) - 6(4) sicher auf den Ablagetisch.

Der Steuereinrichtung sind sämtliche vorgenannten Rahmenbedingungen sowie die Dimensionen sämtlicher abgelegten Arzneimittelpackungen sowie deren Lage bekannt. Basierend darauf wird ein Entnahmeregime erstellt, welches bei Figur 4b sehr einfach sein kann und ggf. nur eine Entnahmeanweisung umfasst, nämlich bewegte sämtliche Arzneimittelpackungen auf den Ablagetisch. In Abhängigkeit von den verfügbaren Lagerplätzen kann es aber auch in einem solchen Fall ggf. sinnvoll oder notwendig sein, die mit einem Entnahmevorgang entnehmbaren Arzneimittelpackungen in zwei Schritten / Entnahmeanweisungen zu entnehmen (z.B., wenn es notwendig ist, 6(3) vor 6(1) einzulagern).

Bei der in Figur 5a dargestellten Situation werden die Arzneimittelpackungen nach rechts immer breiter. Es kann nicht sichergestellt werden, dass nicht eine Arzneimittelpackung liegen bleibt, wenn versucht wird, mit den Klemmbacken sämtliche Arzneimittelpackungen auf den Ablagetisch zu bewegen. In diesem Fall umfasst das Entnahmeregime vier Entnahmeanweisungen, und zwar jeweils eine Arzneimittelpackung zu entnehmen.

In Figur 6a ist eine weitere Situation dargestellt, bei welcher die Arzneimittelpackungen "durcheinander" angeordnet sind. Die genaue Anordnung (sowie die restlichen Rahmenbedingungen) ergeben, dass die Arzneimittelpackungen sicher mit einem Entnahmeregime, welches zwei Entnahmeanweisungen umfasst, entnommen werden können - zunächst die Arzneimittelpackungen 6(2) - 6(4), dann die Arzneimittelpackung 6(1).

In Figur 7a ist eine Ablagesituation dargestellt, in welcher die Arzneimittelpackungen nicht entsprechend der Ablagevorgabe angeordnet wurden - die Arzneimittelpackung 6(2) liegt nicht mit der Längsseite an der Markierung 26. Dies hat zur Folge, dass die Steuereinrichtung (die davon ausgeht, dass stets der Ablagevorgabe gefolgt wird) die Arzneimittelpackung 6(2) ggf. nicht mehr eingelagert werden kann, da der für die Arzneimittelpackung vorgesehene Lagerplatz anhand der der Ablagevorgabe entsprechenden Ausrichtung der Arzneimittelpackung bestimmt wurde. Ferner kann es vorkommen, dass der Versuch der Entnahme der Arzneimittelpackungen 6(2) die Klemmbacken beschädigt, dass diese weiter als nötig (und möglich) geschwenkt werden sollen.

Bei dem gezeigten Beispiel umfasst die Kommissioniervorrichtung daher eine Messeinrichtung 90, die am linken Rand der Einlagerungseinrichtung 20 angeordnet ist, mit welcher "von links" die maximale "Breite" der Arzneimittelpackungen bestimmt werden kann. Bei der Situation der Figur 7a kann erkannt werden, dass die Anordnungen der Arzneimittelpackungen nicht vollumfänglich der Ablagevorgabe entsprechen kann - die maximale Breite (der Arzneimittelpackung 6(2)) ist größer als sie eigentlich sein sollte (Arzneimittelpackung 6(2) gestrichelt). Eine Fehlanordnung zum Beispiel der Arzneimittelpackung 6(4) kann so jedoch nicht erkannt werden. In alternativen Beispielen kann links und rechts eine Messeinrichtung angeordnet sein, wobei auch in diesem Falle Situationen auftreten können, bei denen nicht jede Fehlanordnung erkannt werden kann.

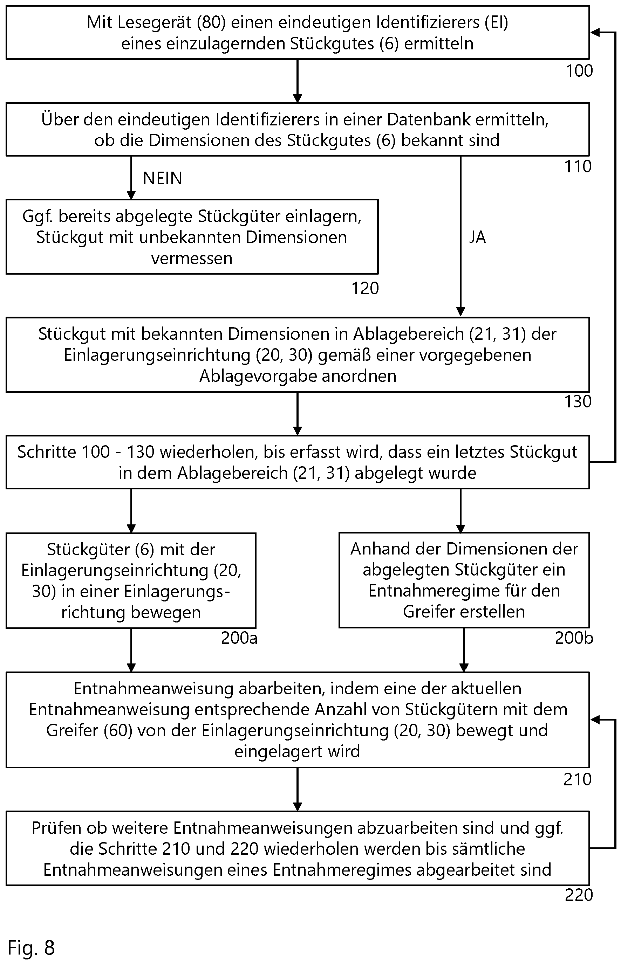

Im nachfolgenden wird eine bevorzugte Ausführungsform des erfindungsgemäßen Verfahrens unter Bezugnahme auf Figur 8 detaillierter beschrieben. Das Verfahren als solches kann mit einer Kommissioniervorrichtung wie sie in den Figuren 1 - 3 beispielhaft beschrieben ist ausgeführt werden. Zunächst wird gemäß einem Schritt 100 mit einem mit der Steuereinrichtung 70 gekoppelten Lesegerät 80 ein eindeutiger Identifizierers EI eines einzulagernden Stückgutes 6 ermittelt. Der eindeutige Identifizierer umfasst zumindest einen eindeutigen Produktcode, der das einzulagernde Stückgut eindeutig identifiziert. Werden beispielsweise Arzneimittelpackungen eingelagert (wovon nachfolgend ausgegangen wird), kann der eindeutige Identifizierer als Produktcode die PZN umfassen. Die PZN ist eine achtstellige, numerische und "nicht sprechende" Nummer, die Arzneimittel nach Bezeichnung, Darreichungsform, Wirkstoffstärke und Packungsgröße eindeutig kennzeichnet. Der eindeutige Identifizierer kann gemäß den "Regeln zur Codierung verifizierungspflichtiger Arzneimittel im deutschen Markt" aufgebaut sein. Eine detaillierte Beschreibung der Regeln ist z.B. veröffentlicht unter "https://www.securpharm.de/wpcontent/uploads/2018/08/securPharm_Codierung_Regeln_DE_V2_03.pdf ". Die Art und Weise des Aufbaus des eindeutigen Identifizierers ist aber für die vorliegende Erfindung nicht wesentlich. Wesentlich ist lediglich, dass der eindeutige Identifizierer für das Stückgut eindeutig ist, so dass über den Identifizierer Stückgut-spezifische Informationen speicher- und abrufbar sind.

In einem Schritt 110 wird dann anhand des eindeutigen Identifizierers in einer Datenbank ermittelt, ob die Dimensionen des Stückgutes bekannt sind. Die Datenbank kann auf der Steuereinrichtung selbst abgelegt sein, es ist aber denkbar, dass es sich um eine Cloud-basierte Datenbank handelt, auf welche eine Vielzahl von Kommissioniervorrichtungen zugreifen können. Mit dem erfindungsgemäßen Verfahren können lediglich Stückgüter (Arzneimittelpackungen) mit bekannten Dimensionen eingelagert werden, da diese notwendig sind, um die Stückgüter in einem nachfolgenden Verfahrensschritt ordnungsgemäß von der Einlagerungseinrichtung entnehmen zu können. Sind die Dimensionen nicht bekannt müssen diese in einem Schritt 120 ermittelt und gespeichert werden - das Vermessen kann beispielweise durch den Benutzer mit einer separaten Vermessungsstation vorgenommen werden. Alternativ kann das Vermessen automatisch mit Hilfe der Kommissioniervorrichtung durchgeführt werden, wie dies weiter unten beschrieben wird.

Für den (üblichen) Fall, dass die Dimensionen bekannt sind, wird in einem Schritt 130 das Stückgut mit bekannten Dimensionen in einem Ablagebereich 21, 31 der Einlagerungseinrichtung 20, 30 gemäß einer vorgegebenen Ablagevorgabe angeordnet. Erfindungsgemäß darf ein Benutzer die Stückgüter also nicht willkürlich ablegen, sondern hat dies entsprechend der Ablagevorgange zu tun, da nur so sichergestellt ist, dass die Steuereinrichtung "weiß", wo wie welche Stückgüter in dem Ablagebereich angeordnet sind. Beispielsweise kann die Ablagevorgabe vorgeben, dass die Stückgüter "von links nach rechts" in dem Ablagebereich angeordnet werden, und zwar mit der Längsseite orthogonal zur späteren Einlagerungsrichtung, also der Längsrichtung der Einlagerungseinrichtung (siehe dazu die Figuren 1 - 3; die Einlagerungsrichtung entspricht der Längsausrichtung der Einlagerungseinrichtungen 20, 30). Würde bei der Anordnung der Stückgüter (mit unterschiedlichen Dimensionen) keine Ablagevorgabe beachtet, stünden der Steuereinrichtung keine Informationen darüber zur Verfügung, wie die Stückgüter angeordnet sind - eine sichere Entnahme der Stückgüter mit dem Greifer wäre nicht möglich. Zwar ist es denkbar, ein Sensorsystem zu installieren, dass nach Ablage einer Mehrzahl von Stückgütern anhand beispielsweise eines von oben aufgenommenen Bildes die Stückgüter anhand der Größe identifiziert. Wenn jedoch zwei unterschiedliche Stückgüter mit gleichen Dimensionen abgelegt werden, ist eine Identifikation anhand eines Bildes schwierig und fehleranfällig.

Die vorgenannten Schritte 100 - 130 werden nun so lange wiederholt, bis erfasst wird, dass ein letztes Stückgut in dem Ablagebereich 21, 31 abgelegt wurde. Dass ein letztes Stückgut abgelegt wurde, kann der Benutzer per Signal angeben, oder es kann ein Sensorsystem vorgesehen sein, dass einen bestimmten Abschnitt des Ablagebereiches abdeckt - sobald ein Stückgut darin angeordnet wird, wird es "zum letzten Stückgut" erklärt.

Auch ist es denkbar, dass das Ermitteln eines Stückgutes mit unbekannten Dimensionen derart interpretiert wird, dass das zuvor aufgelegte Stückgut mit bekannten Dimensionen als "das letzte" Stückgut gekennzeichnet wird - mit der Folge, dass alle zuvor abgelegten Stückgüter entsprechend den nachfolgend beschriebenen Schritten bearbeitet werden. Sobald der Ablagebereich frei ist, kann dann das Stückgut mit unbekannten Dimensionen in dem Ablagebereich angeordnet und automatisch vermessen werden.

Die Vermessung kann auf viele dem Fachmann bekannte Arten durchgeführt werden. Beispielsweise mit oberhalb und seitlich angeordneten Laserarrays oder anderen aus der Logistikbranche bekannten Techniken.

Um die Vermessung möglichst kostengünstig durchzuführen kann zu Bestimmung der Höhe um Beispiel ein Ultraschallsensor verwendet werden, unter welchem das Stückgut zu Vermessung bewegt wird. Dazu werden bei dem Bewegen des Stückgutes unter dem Ultraschallsensor ständig Messwerte ermittelt und der "höchste" Wer als die Höhe des Stückgutes genommen.

Zur Bestimmung der Breite (Breite bezieht sich auf die Erstreckung in Einlagerungsrichtung) eines Stückgutes kann man beispielweise bei der Einlagerungseinrichtung eine Lichtschranke montieren, die orthogonal zur Einlagerungseinrichtung wirkt. Wird ein Stückgut vom Ablagebereich in der Einlagerungsrichtung (weiter in die Kommissioniervorrichtung hinein) bewegt, gibt es an der Lichtschranke zuerst einen ersten Signalwechsel (positive Flanke). Zu diesem Signalwechsel wird die Position der Einlagerungseinrichtung (zum Beispiel eines Einlagerungsbandes) gespeichert. Verlässt das Stückgut die Lichtschranke, gibt es einen weiteren Signalwechsel (negative Flanke). Hierzu wird ebenfalls die Position gespeichert. Die Differenz der beiden Positionen ergibt die Breite des Stückgutes.

Zur Bestimmung der Tiefe (hier die längste Seite eines Stückgutes) können ein oder zwei Ultraschallsensoren verwendet werden. Wie bei der Vermessung der Höhe wird zum Bestimmen der Tiefe das Stückgut an dem oder den seitlich zur Einlagerungseinrichtung angeordneten Ultraschallsensor in Einlagerungsrichtung vorbei bewegt und ständig ein Wert ermittelt - der Extremwert bzw. die Extremwerte bedingt bzw. bedingen dann die Tiefe des Stückgutes. Legt man das Stückgut an einem Stopp neben der Einlagerungseinrichtung an genügt ein Ultraschallsensor an der gegenüberliegenden Seite; werden zwei Ultraschallsensoren verwendet kann das Stückgut beliebig (in vorgegebener Ausrichtung) in dem Ablagebereich angeordnet werden.

Sobald erfasst ist, dass das letzte Stückgut in dem Ablagebereich angeordnet ist, wird in einem Schritt 200a das oder werden die abgelegten Stückgüter 6 mit der Einlagerungseinrichtung 20, 30 in einer Einlagerungsrichtung bewegt. Parallel wird in Schritt 200b anhand der Dimensionen des oder der abgelegten Stückgüter ein Entnahmeregime für den Greifer 60 erstellt, wobei das Entnahmeregime zumindest eine Entnahmeanweisung umfasst, und wobei jede Entnahmeanweisung ein oder mehrere Stückgüter umfasst.

Wie bereits unter Bezugnahme auf die Figuren 4a - 6b beschrieben, ermöglicht es das erfindungsgemäße Verfahren, dass ein Benutzer eine Vielzahl von unterschiedlichen Stückgütern in den Ablagebereich anordnet und diese automatisch eingelagert werden. Zwar ist es notwendig, dass ein Benutzer bei dem Anordnen der Stückgüter in dem Ablagebereich die Ablagevorgabe beachtet, es ist mit dem erfindungsgemäßen Verfahren aufgrund der Ermittlung und Verwendung des Entnahmeregimes aber nicht notwendig, dass die Stückgüter bezogen auf die Dimensionen in einer bestimmten Reihenfolge abgelegt werden. Dies beschleunigt die Einlagerung erheblich, da ein Benutzer einfach willkürlich ein Stückgut aus einer Vielzahl von Stückgütern ergreifen und in dem Ablagebereich anordnen kann.

Bei Figur 4a umfasst das Entnahmeregime eine Entnahmeanweisung, die besagt, dass der Greifer alle aufgelegten Stückgüter zusammen entnehmen kann - also mit den Klemmbacken auf den Ablagetisch bewegen kann. Bei Figur 4b könnte das Entnahmeregime vier Entnahmeanweisungen umfassend jeweils ein Stückgut umfassen - die Stückgüter werden von "rechts nach links" mit dem Greifer entnommen, da nicht sichergestellt werden kann, dass bei Entnahme von mehr als einem Stückgut das "linke" vielleicht bei der Bewegung auf den Ablagetisch nicht mitgenommen wird. Bei Figur 6a sollte das Entnahmeregime zwei Entnahmeanweisungen umfassen; die erste umfasst die drei rechten Stückgüter, die zweite das linke Stückgut.

Nachdem die Stückgüter auf den Ablagetisch des Greifers bewegt wurden, werden diese entsprechend dem Fachmann bekannten Arbeitsschritten auf von der Steuereinrichtung bestimmten Lagerplätzen abgeordnet.

## Patentansprüche

1. Verfahren zum Einlagern einer Mehrzahl von Stückgütern in eine Kommissioniervorrichtung (1) mit
zumindest einer Regalreihe (10) mit einer Mehrzahl von Lagerplätzen, einer Steuereinrichtung (70), einer Einlagerungseinrichtung (20, 30) sowie einem Greifer (60) für Stückgüter, wobei
a) mit einem mit der Steuereinrichtung (70) gekoppelten Lesegerät (80) ein eindeutiger Identifizierers (EI) eines einzulagernden Stückgutes (6) ermittelt wird,
b) über den eindeutigen Identifizierers in einer Datenbank ermittelt wird, ob die Dimensionen des Stückgutes (6) bekannt sind,
c) ein Stückgut mit bekannten Dimensionen in einem Ablagebereich (21, 31) der Einlagerungseinrichtung (20, 30) gemäß einer vorgegebenen Ablagevorgabe angeordnet wird,
d) die Schritte a) - c) wiederholt werden, bis erfasst wird, dass ein letztes Stückgut in dem Ablagebereich (21, 31) abgelegt wurde,
e1) das oder die abgelegten Stückgüter (6) mit der Einlagerungseinrichtung (20, 30) in einer Einlagerungsrichtung bewegt werden und
e2) anhand der Dimensionen des oder der abgelegten Stückgüter ein Entnahmeregime für den Greifer (60) erstellt wird, wobei das Entnahmeregime zumindest eine Entnahmeanweisung umfasst, und wobei jede Entnahmeanweisung ein oder mehrere Stückgüter umfasst,
f1) eine Entnahmeanweisung abgearbeitet wird, indem eine der aktuellen Entnahmeanweisung entsprechende Anzahl von Stückgütern mit dem Greifer (60) von der Einlagerungseinrichtung (20, 30) bewegt und eingelagert wird,
f2) geprüft wird, ob weitere Entnahmeanweisungen abzuarbeiten sind und die Schritte f1) und f2) wiederholt werden bis sämtliche Entnahmeanweisungen eines Entnahmeregimes abgearbeitet sind.

2. Verfahren zum Einlagern einer Mehrzahl von Stückgütern in eine Kommissioniervorrichtung (1) nach Anspruch 1,
**dadurch gekennzeichnet, dass** bei unbekannten Dimensionen eines Stückguts dieses vermessen wird und die Dimensionen in der Datenbank gespeichert werden.

3. Verfahren zum Einlagern einer Mehrzahl von Stückgütern in eine Kommissioniervorrichtung (1) nach Anspruch 2,
**dadurch gekennzeichnet, dass** ein Stückgut vermessen wird, indem in dem Ablagebereich angeordnete Stückgüter gemäß den Schritten e1) - f2) eingelagert werden, das Stückgut mit unbekannten Dimensionen in dem Ablagebrich angeordnet und vermessen wird und die Dimensionen in der Datenbank gespeichert werden.

4. Verfahren zum Einlagern einer Mehrzahl von Stückgütern in eine Kommissioniervorrichtung (1) nach einem der Ansprüche 1 - 3,
**dadurch gekennzeichnet, dass** ein Ablegen eines letzten Stückgutes erfasst wird, indem ein Benutzer eine entsprechende Eingabe an die Steuereinrichtung übermittelt.

5. Verfahren zum Einlagern einer Mehrzahl von Stückgütern in eine Kommissioniervorrichtung (1) nach einem der Ansprüche 1 - 3,
**dadurch gekennzeichnet, dass** das Ablegen eines letzten Stückgutes anhand eines der Ablagefläche zugeordneten Sensors ermittelt wird.

6. Verfahren zum Einlagern einer Mehrzahl von Stückgütern in eine Kommissioniervorrichtung (1) nach einem der Ansprüche 1 - 5,
**dadurch gekennzeichnet, dass** nach dem Erfassen des Ablegens des letzten Stückguts in dem Ablagebereich eine Breite der Mehrzahl der abgelegten Stückgüter ermittelt wird und diese mit der größten Breite der abgelegten Stückgüter verglichen wird und bei Auftreten einer einen Grenzwert überschreitenden Abweichung ein Signal ausgegeben wird.

7. Verfahren zum Einlagern einer Mehrzahl von Stückgütern in eine Kommissioniervorrichtung (1) nach einem der Ansprüche 1 - 6, bei welchem der eindeutige Identifizierer eines Stückguts in Ablaufdatum umfasst,
**dadurch gekennzeichnet, dass** das Ablaufdatum des einzulagernden Stückguts mit dem Ablaufdatum eines gleichen Stückguts verglichen wird und, sofern das einzulagernde Stückgut ein früheres Ablaufdatum aufweist, der Lagerplatz des einzulagernden Stückguts optimiert und / oder die Auslagerungsreihenfolge derart angepasst wird, dass das Stückgut mit dem früheren Ablaufdatum bevorzugt ausgelagert wird.

8. Verfahren zum Einlagern einer Mehrzahl von Stückgütern in eine Kommissioniervorrichtung (1) nach einem der Ansprüche 1 - 7, bei welchem der eindeutige Identifizierer eine eindeutige Seriennummer umfasst,
**dadurch gekennzeichnet, dass** die eindeutige Seriennummer anhand einer Datenbank verifiziert wird und das Verfahren zum Einlagern bei einer fehlerhaften Verifikation gestoppt wird.
